# EUROPÄISCHE PATENTANMELDUNG

(11) **EP 4 664 749 A1**
(43) Veröffentlichungstag der Anmeldung: **17.12.2025**
(21) Anmeldenummer: 24181466.4
(22) Anmeldetag: 11.06.2024
(51) Int. Cl.: H02S 20/23, E04G 21/32, F24S 25/30

(54) **SCHRÄGDACHSYSTEM FÜR WENIGSTENS EIN PHOTOVOLTAIKMODUL**

(71) Anmelder: ABS Safety GmbH, 47623 Kevelaer (DE)
(72) Erfinder: RANKERS, Simon, 41334 Nettetal (DE); JOEREßEN, Philipp, 47574 Goch (DE)
(74) Vertreter: Seemann & Partner Patentanwälte mbB

(57) **Zusammenfassung**

Die Erfindung betrifft u.a. ein Schrägdachsystem für wenigstens ein Photovoltaikmodul (30) mit einer Tragkonstruktion für wenigstens ein oder mehrere Photovoltaikmodule (30), wobei die Tragkonstruktion mit einem Schrägdach (20) eines Gebäudes (G) verbunden oder verbindbar ist, wobei die Tragkonstruktion wenigstens ein oder mehrere Tragschienen (14) für wenigstens ein oder mehrere Photovoltaikmodule (30) aufweist, wobei das Photovoltaikmodule (30) oder die Photovoltaikmodule (30) auf der Tragschiene (14) oder den Tragschienen (14) angeordnet oder anordbar sind, wobei die Tragschiene (14) oder mehrere Tragschienen (14) eingerichtet sind, dass wenigstens eine Absturzsicherungsvorrichtung (20, 22, 40, 50) an der Tragschiene (14) oder an den Tragschienen (14) angeordnet oder anordbar ist.

## Beschreibung

Die Erfindung betrifft ein Schrägdachsystem für wenigstens ein Photovoltaikmodul mit einer Tragkonstruktion für wenigstens ein oder mehrere Photovoltaikmodule. Ferner betrifft die Erfindung eine Verwendung eines Schrägdachsystems und ein Photovoltaiksystem.

Es ist bekannt, dass auf schräg geneigten Dächern von Gebäuden, sogenannte Schrägdächern, Photovoltaikanlagen angeordnet sind. Für die Montage von Photovoltaikmodulen auf Schrägdächern mit Dacheindeckungen, wie zum Beispiel Dachpfannen oder Trapezblechen oder dergleichen, sind Befestigungssysteme vorgesehen, die als Aufdachkonstruktion auf dem Schrägdach über der Dacheindeckung montiert ist. Diese Aufdachkonstruktion wird beispielsweise unter Verwendung von Dachhaken etc. mit dem Schrägdach verbunden. Um die Photovoltaikmodule auf dem Schrägdach anzuordnen, sind bei der Aufdachkonstruktion Tragschienen für die Module vorgesehen, auf denen die Module mittels Klemmen oder dergleichen fixiert sind. Die Tragschienen der Aufdachkonstruktion sind vorzugsweise parallel zueinander oder kreuzweise auf dem Dach verlegt.

Eine Aufgabe der Erfindung besteht darin, eine einfache und kostengünstige Wartung von Photovoltaikmodulen oder -anlagen oder dergleichen auf einem Schrägdach eines Gebäudes zu gewährleisten.

Gelöst wird diese Aufgabe durch ein Schrägdachsystem für wenigstens ein Photovoltaikmodul mit einer Tragkonstruktion für wenigstens ein oder mehrere Photovoltaikmodule, wobei die Tragkonstruktion mit einem Schrägdach eines Gebäudes verbunden oder verbindbar ist, wobei die Tragkonstruktion wenigstens ein oder mehrere Tragschienen für wenigstens ein oder mehrere Photovoltaikmodule aufweist, wobei das Photovoltaikmodul oder die Photovoltaikmodule auf der Tragschiene oder den Tragschienen angeordnet oder anordbar sind, wobei die Tragschiene oder mehrere Tragschienen eingerichtet sind, dass wenigstens eine Absturzsicherungsvorrichtung an der Tragschiene oder an den Tragschienen angeordnet oder anordbar ist.

Die Erfindung beruht auf dem Gedanken, dass ein mit wenigstens einem Photovoltaikmodul ausgebildetes Schrägdachsystem eine Absturzsicherungsvorrichtung aufweist, wodurch die Sicherheit bei der Wartung durch Wartungspersonal des wenigstens einen Photovoltaikmoduls erhöht wird. Hierdurch wird unter Verwendung der Tragkonstruktion, die vorzugsweise parallel zueinander angeordnete Tragschienen oder kreuzweise angeordnete Tragschienen für wenigstens ein oder mehrere Photovoltaikmodule aufweist, an wenigstens einer Tragschiene eine Absturzsicherungsvorrichtung angeordnet. Durch die Kombination der Tragschienen für die Photovoltaikmodule mit der wenigstens einen Absturzsicherungsvorrichtung, die mit wenigstens einer oder mehreren Tragschienen verbunden oder verbindbar ist, wird der Montageaufwand für eine sichere Absturzsicherungsvorrichtung geringgehalten, da die Tragschienen für die Photovoltaikmodule, die beispielsweise als Unterbaukonstruktion mit dem schräg geneigten Dach oder mit Dachsparren des Schrägdachs verbunden sind, auch für die Absturzsicherungsvorrichtung(en) verwendet werden. Insgesamt ergibt sich dadurch ein Schrägdachsystem für Photovoltaikmodule, bei der einen Absturzsicherungsvorrichtung integriert ist oder wird.

Im Rahmen der Erfindung ist es möglich, dass mehrere, insbesondere verschiedenartige, Absturzsicherungsvorrichtung an den Tragschienen angeordnet oder anordbar sind.

Oberseitig sind auf den Tragschienen die Photovoltaikmodule angeordnet und mittels entsprechender Klemmen oder Klammern etc. an den Tragschienen befestigt. Unterseitig sind die Tragschienen beispielsweise unter Verwendung von Dachklammern am Schrägdach des Gebäudes dauerhaft befestigt.

Gemäß einer bevorzugten Ausführungsform des Schrägdachsystems ist vorgesehen, dass an oder in einer Tragschiene ein, vorzugsweise beweglicher oder ortsfester, Anschlagpunkt einer Absturzsicherungsvorrichtung vorgesehen ist, wobei insbesondere die Tragschiene für den Anschlagpunkt der Absturzsicherungsvorrichtung in einem Firstbereich des Schrägdachs angeordnet ist. Insbesondere ist vorgesehen, dass der, vorzugsweise bewegliche oder ortsfeste, Anschlagpunkt mit wenigstens einer Tragschiene verbunden ist. In einer bevorzugten Ausgestaltung ist die Absturzsicherungsvorrichtung derart ausgebildet, dass ein beweglicher Anschlagpunkt an oder entlang oder in einer Tragschiene für wenigstens ein Photovoltaikmodul bewegbar ausgebildet ist, wobei an dem beweglichen Anschlagpunkt einer Absturzsicherungsvorrichtung zur Verhinderung eines Absturzes einer Wartungsperson befestigt ist.

Darüber hinaus zeichnet sich eine Weiterbildung des Schrägdachsystems dadurch aus, dass an einer Tragschiene oder an mehreren Tragschienen jeweils eine Halterung für ein Absturzgeländersystem, insbesondere lösbar, weiter vorzugsweise manuell lösbar, befestigbar oder befestigt ist, wobei insbesondere die Halterung oder die Halterungen für das Absturzgeländersystem in einem Ortgangbereich des Schrägdachs und/oder in einem Traufbereich des Schrägdachs anordbar oder angeordnet sind. Durch die Verwendung des Absturzgeländersystems, das mittels einer oder mehrerer Halterungen mit den Tragschienen der Tragkonstruktion verbunden oder verbindbar ist, wird die Sicherheit von Wartungspersonen auf dem Schrägdach während der Ausführung von Wartungsarbeiten signifikant erhöht. Vorzugsweise sind die Halterungen manuell betätigbar, wodurch das Absturzgeländersystem vor der Ausführung von Wartungsarbeiten schnell und sicher mit den Tragschienen verbunden wird.

Vorzugsweise ist das Absturzgeländersystem als ein Gitter und/oder als ein Netz und/oder als ein Schneefangzaun ausgebildet.

Zur exakten Ausrichtung des Absturzgeländersystems an den Tragschienen ist vorgesehen, dass die Halterung oder die Halterungen für das Absturzgeländersystem in den Tragschienen verrastbar oder verrastet sind und/oder dass die Halterung oder die Halterungen für das Absturzgeländersystem mit einer, insbesondere entsicherbaren, Sicherheitsblockiervorrichtung ausgebildet sind. Zur Befestigung der Halterungen in den Tragschienen werden die Halterungen mittels Rastmittel verrastet. Außerdem ist im Rahmen der Erfindung vorgesehen, dass die Halterungen mit einer Sicherheitsblockiervorrichtung ausgebildet sind, so dass beim, vorzugsweise manuellen, Lösen der Halterungen von den Tragschienen durch die Sicherheitsblockiervorrichtung verhindert wird, dass die Verbindung der Halterungen von den mit den Tragschienen vollständig gelöst wird. Hierdurch wird die Sicherheit für das Absturzgeländersystem erhöht. Durch eine, vorzugsweise manuelle, Betätigung der Sicherheitsblockiervorrichtung wird die Verbindung der Halterungen mit den Tragschienen vollständig gelöst. Darüber hinaus ist in einer Ausführungsform vorgesehen, dass die Halterungen sich durch eine manuelle Betätigung leicht von den Tragschienen lösen und entfernen lassen.

Ferner zeichnet sich eine Weiterbildung des Schrägdachsystems dadurch aus, dass die Halterung oder die Halterungen jeweils entlang einer Längserstreckung der Tragschienen verschiebbar und/oder positionierbar sind. Damit wird ermöglicht, dass die Halterungen jeweils entlang der Längsachse der Tragschienen verschiebbar sind und für die Ausrichtung oder eine vorbestimmte Anordnung des Absturzgeländersystems entsprechend positioniert sind.

Vorzugsweise sind die Position und/oder die Neigung des Absturzgeländersystems, vorzugsweise in Bezug auf die Neigung des Schrägdachs, einstellbar, insbesondere variabel einstellbar.

Außerdem ist es gemäß einer Ausführungsform bevorzugt, dass das Absturzgeländersystem wenigstens einen Geländerholm aufweist, wobei der wenigstens eine Geländerholm in seiner Länge, vorzugsweise variabel, einstellbar ist. Hierdurch wird beispielsweise ermöglicht, dass eine Auskragung des Absturzgeländersystems entsprechend den Umgebungsbedingungen auf einfache Weise zur Erhöhung der Sicherheit von Wartungspersonen ausgebildet ist.

Ferner ist bei einer Weiterbildung des Schrägdachsystems vorgesehen, dass an mehreren Tragschienen eine Seilsicherungseinrichtung als eine, insbesondere weitere, Absturzsicherungsvorrichtung, vorzugsweise im Firstbereich und/oder im Ortgangbereich und/oder im Traufbereich des Schrägdachs, angeordnet oder anordbar ist.

Gemäß einer bevorzugten Ausgestaltung ist an wenigstens einer Tragschiene ein Blitzableiter angeordnet oder anordbar.

Die Sicherheit von Wartungspersonen wird bei der Wartung von Photovoltaikmodulen auf dem Schrägdach gemäß einem weiteren Aspekt dadurch erhöht, dass an der Tragschiene oder an den Tragschienen eine Plattform, insbesondere ein Tritt oder ein Podest oder ein Laufsteg, für wenigstens eine Person befestigt oder befestigbar, vorzugsweise im Firstbereich und/oder im Ortgangbereich und/oder im Traufbereich des Schrägdachs, ist. Durch die Bereitstellung einer Plattform, auf der Wartungspersonen sicher stehen können, und gegebenenfalls in Kombination mit wenigstens einer weiteren Absturzsicherungsvorrichtung, wie zum Beispiel einem Absturzgeländersystem, wird gewährleistet, dass Wartungspersonen auf dem Schrägdach sich leicht und gesichert bewegen können.

Darüber hinaus ist bei einer Ausgestaltung des Schrägdachsystems vorteilhafterweise vorgesehen, dass die Tragschiene oder die Tragschienen zur Aufnahme einer ein Fluid, insbesondere Wasser, führenden Leitung, insbesondere Schlauch oder Rohr, ausgebildet sind, wobei insbesondere in der Tragschiene oder den Tragschienen eine Leitung für ein Fluid, insbesondere Wasser, angeordnet oder anordbar ist. Beispielsweise weisen die Tragschienen einen Hohlraum auf oder sind als Hohlprofile ausgebildet, wodurch innerhalb der Tragschienen eine Leitung für ein Fluid innerhalb der Tragschienen verlegt ist oder wird. Hierdurch ist es möglich, Flüssigkeiten, wie zum Beispiel Wasser für die Reinigung von Photovoltaikmodulen bereitzustellen, wobei beispielsweise die Flüssigkeit mittels eines Schlauchs, der mit der Leitung in den Tragschienen verbunden ist, über den Photovoltaikmodulen verteilt wird. Ferner ist es im Rahmen der Erfindung möglich, dass mittels eines bereitgestellten Fluids, wie zum Beispiel erhitzter Wasserdampf oder warmes Wasser, die Photovoltaikmodule zu enteisen oder von Schnee zu befreien.

Außerdem wird die Aufgabe gelöst durch eine Verwendung eines Schrägdachsystems, wie voranstehend beschrieben, für ein Schrägdach eines Gebäudes, wobei insbesondere das Schrägdachsystem auf dem Schrägdach des Gebäudes angeordnet oder anordbar ist.

Darüber hinaus wird die Aufgabe gelöst durch ein Photovoltaiksystem mit einem Schrägdachsystem, wie voranstehend beschrieben, und mindestens einem Photovoltaikmodul zum Anordnen des Photovoltaikmoduls auf einem Schrägdach eines Gebäudes. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine perspektivische Ansicht eines Schrägdachs eines Gebäudes im Ausschnitt;
- Fig. 2a bis 2c: jeweils schematische Ansichten des Schrägdachs aus Fig. 1 in vergrößerten Ansichten und
- Fig. 3: schematisch eine perspektivische Ansicht eines weiteren Schrägdachs eines Gebäudes im Ausschnitt;
- Fig. 4a bis 4c: jeweils schematische Ansichten des Schrägdachs aus Fig. 3 in vergrößerten Ansichten.

In den Zeichnungen sind jeweils gleiche oder gleichartige Elemente und/oder Teile mit denselben Bezugsziffern versehen, so dass von einer erneuten Vorstellung jeweils abgesehen wird.

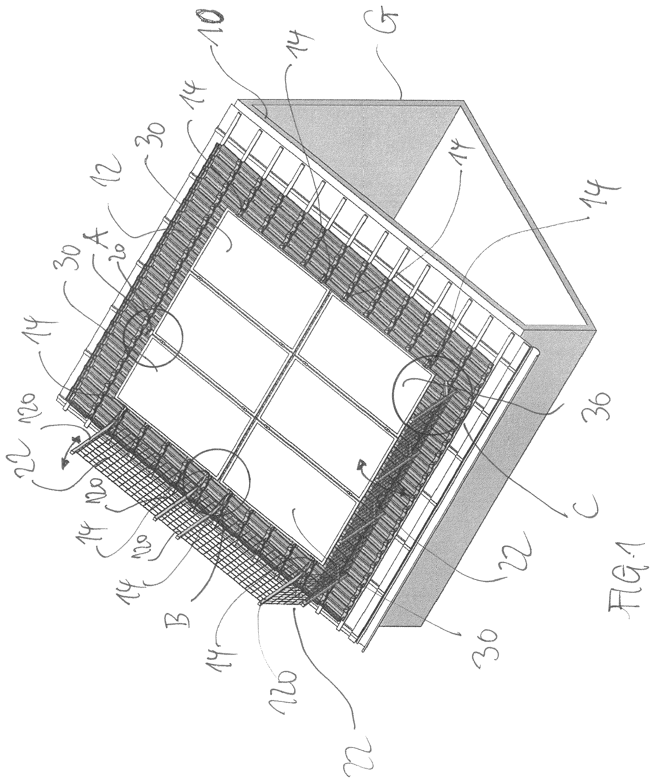

In Fig. 1 ist schematisch eine perspektivische Ansicht eines Schrägdachs 10 eines schematisch bezeichneten Gebäudes G gezeigt. Das Schrägdach 10 gegenüber der Horizontalen geneigt. Der Neigungswinkel des Schrägdachs beträgt vorzugsweise zwischen 10° bis 70°.

Das Schrägdach 10 ist auf der Oberseite mit Dachziegeln 12 belegt. Oberhalb der Dachziegeln 12 ist auf dem Schrägdach 10 eine Tragkonstruktion mit mehreren Tragschienen 14 angeordnet, wobei die Tragschienen 14 der Tragkonstruktion mit dem Schrägdach unter Verwendung von beispielsweise Dachklammern (hier nicht dargestellt) oder dergleichen fest verbunden sind. Die Tragschienen 14 sind vorzugsweise parallel zueinander auf dem Schrägdach 10 angeordnet sowie ausgerichtet. Auf den Tragschienen 14 liegen Photovoltaikmodule 30 auf, die mittels Klemmen 32 auf den Tragschienen 14 geklemmt angeordnet sind. Hierdurch sind die Photovoltaikmodule 30 fest auf den Tragschienen 14 geklemmt.

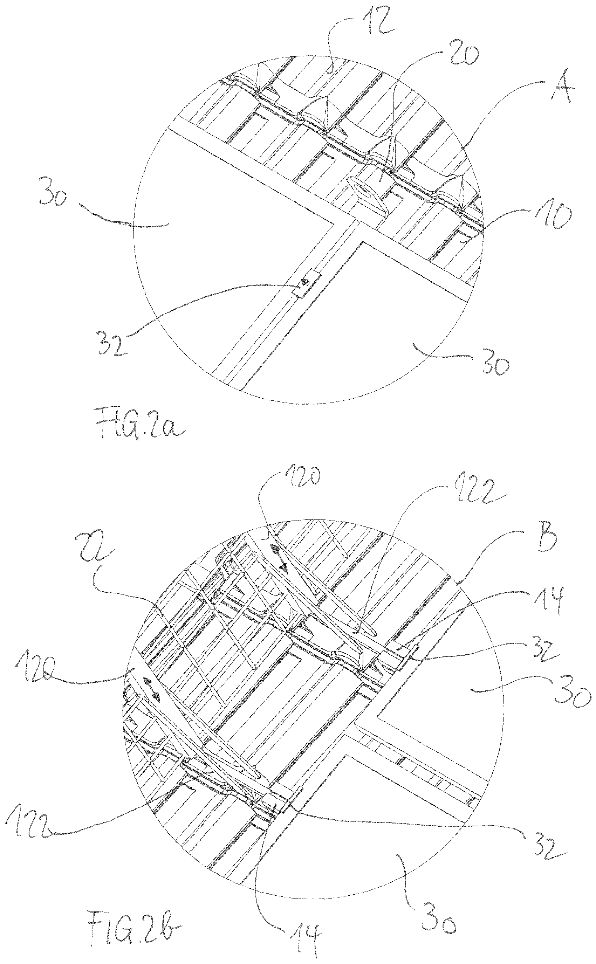

In Fig. 2a bis 2c sind jeweils vergrößerte Darstellungen der in Fig. 1 gekennzeichneten Bereiche A, B und C gezeigt.

Fig. 2a zeigt einen Befestigungspunkt für eine Individualabsturzsicherung 20 in einem Firstbereich des Schrägdachs 10. Oberhalb der Photovoltaikmodule ist eine beispielsweise mit einer Öse oder Aufnahme versehene Individualabsturzsicherung 20 ausgebildet, wobei die Individualabsturzsicherung auf der Rückseite der Photovoltaikmodule 30 mit der Tragschiene 14 (hier nicht sichtbar) verbunden ist. In die Öse oder die Aufnahme der Individualabsturzsicherung 20 ist beispielsweise ein Sicherungsseil für eine Wartungsperson einführbar, so dass nach Einführung des Sicherungsseils in die Individualabsturzsicherung die damit verbundene und gesicherte Wartungsperson Wartungsmaßnahmen an den Photovoltaikmodulen 30 durchführen kann.

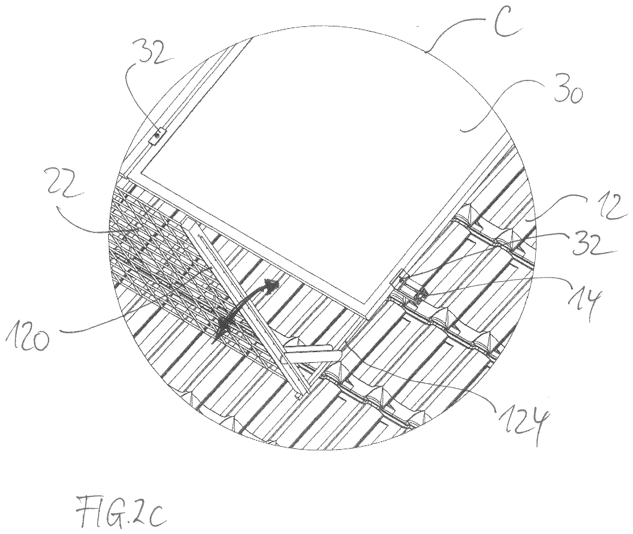

Bei dem in Fig. 2b gezeigten Ausschnitt des Bereichs B (vgl. Fig. 1) ist in einem Gangbereich und einem Traufbereich des Schrägdachs 10 ein Absturzgeländer 22 angeordnet. Das gitterartige Absturzgeländer 22 ist unter Verwendung von Halterungen 122, 124 (vgl. Fig. 2c) mit den Tragschienen 14 der Tragkonstruktion für die Photovoltaikmodule 30 lösbar verbunden. Vorzugsweise sind die Halterungen 122 in Längsrichtung der Tragschienen 14 bewegbar, wobei zur Positionierung des Absturzgeländers 22 beispielsweise im Gangbereich (vgl. Fig. 2b) die Halterungen 122 in den Tragschienen 14 verrastet werden. Mittels der Halterungen 122 ist zudem das Absturzgeländer 22 in der Ausrichtung und Neigung zur Oberfläche des Schrägdachs 10 variabel einstellbar. Darüber hinaus ist im Rahmen der Erfindung vorgesehen, dass die Halterungen 122 durch ein einfaches, insbesondere manuelles, Herausklicken von den Tragschienen 14 entfernbar sind.

Die im Traufbereich vorgesehenen Halterungen 124 (vgl. Fig. 2c) für den im Traufbereich angeordneten Abschnitt des Absturzgeländers 22 sind mit der Tragschiene 14 verbunden, wobei die Halterung 124 ebenfalls ermöglichen, die Neigung oder Ausrichtung des Abschnitts des Absturzgeländers 22 einzustellen.

Das Absturzgeländer 22 weist vorzugweise Geländerholme 120 auf, die in einer Ausgestaltung in ihrer Länge bzw. Längserstreckung einstellbar sind.

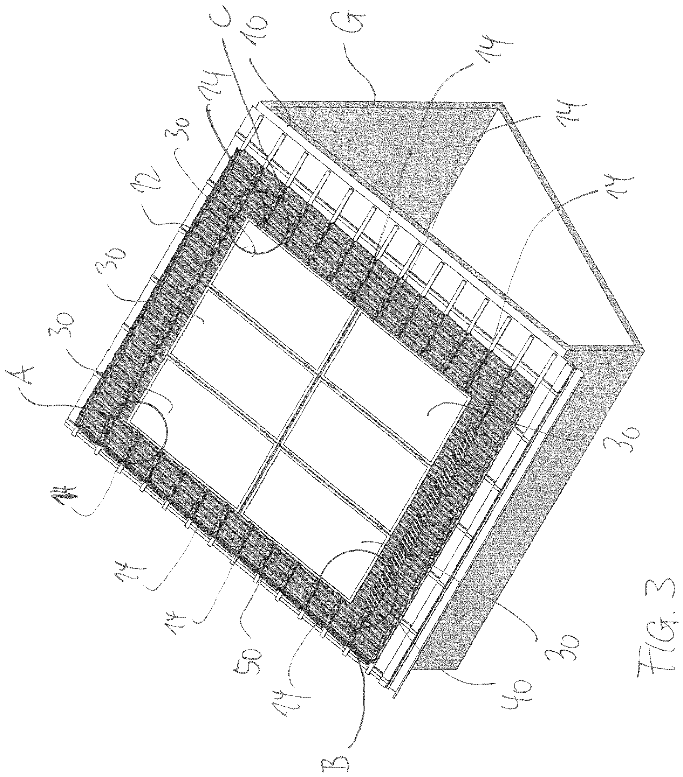

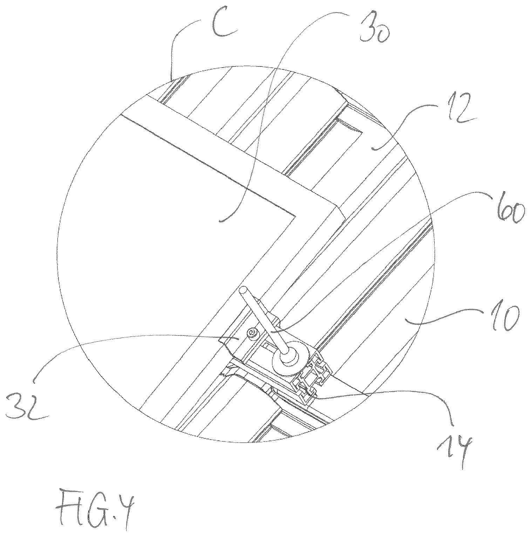

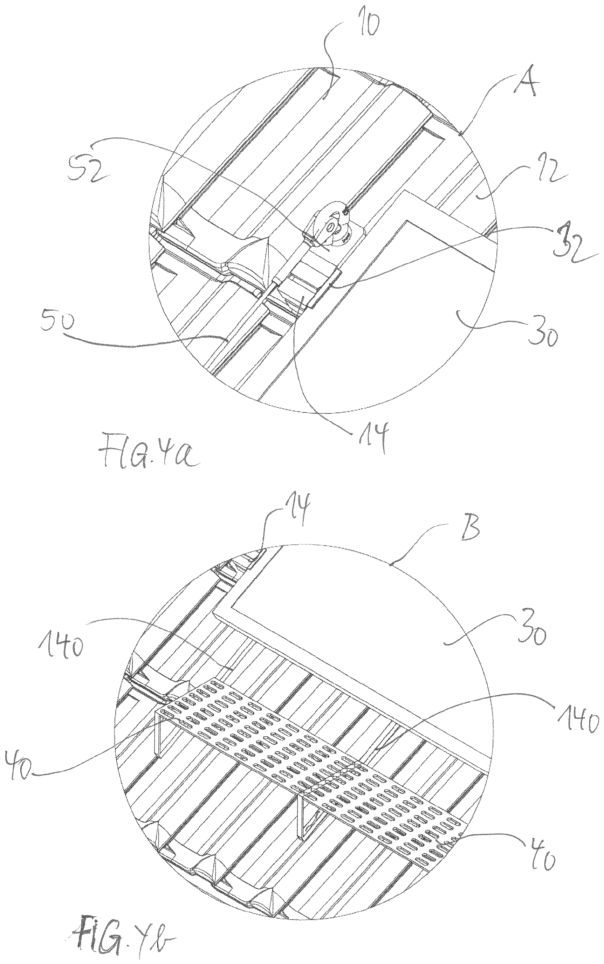

Fig. 3 zeigt ein weiteres Ausführungsbeispiel eines Schrägdachs 10 mit weiteren Absturzsicherungsvorrichtungen. Die in Fig. 3 gekennzeichneten Bereiche A, B und C sind in den Fig. 4a, 4b und 4c vergrößert dargestellt.

Bei dem in Fig. 3 schematisch gezeigten Schrägdach 10 des Gebäudes G ist gemäß diesem Ausführungsbeispiel im Traufbereich ein Laufgitter 40 vorgesehen, wobei das Laufgitter 40 unter Verwendung von Halterungen 140 mit der dem Traufbereich unteren Tragschiene 14, vorzugsweise lösbar oder, verbunden ist (vgl. Fig. 4a). Ferner ist im Rahmen der Erfindung vorgesehen, dass anstelle des Laufgitters 40 eine Schneefangvorrichtung mittels von Halterungen mit der dem Traufbereich zugewandten Tragschiene 14 verbunden ist.

Ferner ist im Gangbereich des Schrägdachs 10 ein Sicherungsseil 50 angeordnet, wobei das Sicherungsseil 50 unter Verwendung von Halterungen 52 mit der dem Firstbereich zugewandten Tragschiene 14 (vgl. Fig. 4b) und mit der dem Traufbereich zugewandten Tragschiene 14, vorzugsweise lösbar, endseitig verbunden ist. Ferner ist zur weiteren Erhöhung der Sicherheit von Wartungspersonen im Firstbereich ein Blitzableiter 60 an der dem Firstbereich zugewandten Tragschiene 14 an einer Endseite angeordnet (vgl. Fig. 4c).

Die in den Ausführungsbeispielen gezeigten Absturzsicherungsvorrichtungen können auch in Kombination miteinander an einem Schrägdach 10 ausgebildet sein.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Schrägdach
- 12: Dachziegel
- 14: Tragschiene
- 20: Individualabsturzsicherung
- 22: Absturzgeländer
- 30: Photovoltaikmodul
- 32: Klemme
- 40: Laufgitter
- 50: Sicherungsseil
- 52: Halterung
- 60: Blitzableiter
- 120: Geländerholm
- 122: Halterung
- 124: Halterung
- 140: Halterung
- G: Gebäude

## Patentansprüche

1. Schrägdachsystem für wenigstens ein Photovoltaikmodul (30) mit einer Tragkonstruktion für wenigstens ein oder mehrere Photovoltaikmodule (30), wobei die Tragkonstruktion mit einem Schrägdach (20) eines Gebäudes (G) verbunden oder verbindbar ist, wobei die Tragkonstruktion wenigstens ein oder mehrere Tragschienen (14) für wenigstens ein oder mehrere Photovoltaikmodule (30) aufweist, wobei das Photovoltaikmodule (30) oder die Photovoltaikmodule (30) auf der Tragschiene (14) oder den Tragschienen (14) angeordnet oder anordbar sind, wobei die Tragschiene (14) oder mehrere Tragschienen (14) eingerichtet sind, dass wenigstens eine Absturzsicherungsvorrichtung (20, 22, 40, 50) an der Tragschiene (14) oder an den Tragschienen (14) angeordnet oder anordbar ist.

2. Schrägdachsystem nach Anspruch 1, **dadurch gekennzeichnet, dass** an oder in einer Tragschiene (14) ein, vorzugsweise beweglicher oder ortsfester, Anschlagpunkt einer Absturzsicherungsvorrichtung (20, 22, 40, 50) vorgesehen ist, wobei insbesondere die Tragschiene (14) für den Anschlagpunkt der Absturzsicherungsvorrichtung (20, 22, 40, 50) in einem Firstbereich des Schrägdachs (20) angeordnet ist.

3. Schrägdachsystem nach Anspruch 1 oder 2, **dadurch gekennzeichnet, dass** an einer Tragschiene (14) oder an mehreren Tragschienen (14) jeweils eine Halterung für ein Absturzgeländersystem (22), insbesondere lösbar, weiter vorzugsweise manuell lösbar, befestigbar oder befestigt ist, wobei insbesondere die Halterung oder die Halterungen für das Absturzgeländersystem (22) in einem Ortgangbereich des Schrägdachs (20) und/oder in einem Traufbereich des Schrägdachs (20) anordbar oder angeordnet sind.

4. Schrägdachsystem nach Anspruch 3, **dadurch gekennzeichnet, dass** das Absturzgeländersystem (22) als ein Gitter und/oder als ein Netz und/oder als ein Schneefangzaun ausgebildet ist.

5. Schrägdachsystem nach Anspruch 3 oder 4, **dadurch gekennzeichnet, dass** die Halterung (122, 124) oder die Halterungen (122, 124) für das Absturzgeländersystem (22) in den Tragschienen (14) verrastbar oder verrastet sind und/oder dass die Halterung (122, 124) oder die Halterungen (122, 124) für das Absturzgeländersystem (22) mit einer, insbesondere entsicherbaren, Sicherheitsblockiervorrichtung ausgebildet sind.

6. Schrägdachsystem nach einem der Ansprüche 3 bis 5, **dadurch gekennzeichnet, dass** die Halterung (122, 124) oder die Halterungen (122, 124) jeweils entlang einer Längserstreckung der Tragschienen (14) verschiebbar und/oder positionierbar sind.

7. Schrägdachsystem nach einem der Ansprüche 3 bis 6, **dadurch gekennzeichnet, dass** die Position und/oder die Neigung des Absturzgeländersystems (22), vorzugsweise in Bezug auf die Neigung des Schrägdachs (20), einstellbar, insbesondere variabel einstellbar, sind.

8. Schrägdachsystem nach einem der Ansprüche 3 bis 7, **dadurch gekennzeichnet, dass** das Absturzgeländersystem (22) wenigstens einen Geländerholm (120) aufweist, wobei der wenigstens eine Geländerholm (120) in seiner Länge, vorzugsweise variabel, einstellbar ist.

9. Schrägdachsystem nach einem der Ansprüche 1 bis 8, **dadurch gekennzeichnet, dass** an mehreren Tragschienen (14) eine Seilsicherungseinrichtung (50) als eine, insbesondere weitere, Absturzsicherungsvorrichtung (20, 22, 40, 50), vorzugsweise im Firstbereich und/oder im Ortgangbereich und/oder im Traufbereich des Schrägdachs (20), angeordnet oder anordbar ist.

10. Schrägdachsystem nach einem der Ansprüche 1 bis 9, **dadurch gekennzeichnet, dass** an wenigstens einer Tragschiene (14) ein Blitzableiter (60) angeordnet oder anordbar ist.

11. Schrägdachsystem nach einem der Ansprüche 1 bis 10, **dadurch gekennzeichnet, dass** an der Tragschiene (14) oder an den Tragschienen (14) eine Plattform, insbesondere ein Tritt oder ein Podest oder ein Laufsteg, für wenigstens eine Person befestigt oder befestigbar, vorzugsweise im Firstbereich und/oder im Ortgangbereich und/oder im Traufbereich des Schrägdachs (20), ist.

12. Schrägdachsystem nach einem der Ansprüche 1 bis 11, **dadurch gekennzeichnet, dass** die Tragschiene (14) oder die Tragschienen (14) zur Aufnahme einer ein Fluid, insbesondere Wasser, führenden Leitung, insbesondere Schlauch oder Rohr, ausgebildet sind, wobei insbesondere in der Tragschiene (14) oder den Tragschienen (14) eine Leitung für ein Fluid, insbesondere Wasser, angeordnet oder anordbar ist.

13. Verwendung eines Schrägdachsystems nach einem der Ansprüche 1 bis 12 für ein Schrägdach (20) eines Gebäudes (G), wobei insbesondere das Schrägdachsystem auf dem Schrägdach (20) des Gebäudes (G) angeordnet oder anordbar ist.

14. Photovoltaiksystem mit einem Schrägdachsystem nach einem der Ansprüche 1 bis 12 und mindestens einem Photovoltaikmodul (30) zum Anordnen des Photovoltaikmoduls (30) auf einem Schrägdach (20) eines Gebäudes (G).
